# EUROPEAN PATENT SPECIFICATION

(11) **EP 2 694 247 B1**
(45) Date of publication and mention of the grant of the patent: **13.01.2016**
(21) Application number: 12714039.0
(22) Date of filing: 03.04.2012
(51) Int. Cl.: B24B 5/42, B24B 49/04

(54) **SUPPORT ASSEMBLY FOR USE WITH A MACHINE TOOL AND METHODS OF OPERATION THEREOF**
STÜTZANORDNUNG ZUR ANWENDUNG MIT EINEM MASCHINENWERKZEUG UND BETRIEBSVERFAHREN DAFÜR
ENSEMBLE SUPPORT DESTINÉ À ÊTRE UTILISÉ AVEC UNE MACHINE-OUTIL ET PROCÉDÉ DE COMMANDE DE CET ENSEMBLE

(30) Priority: 08.04.2011 GB 201106012
(43) Date of publication of application: 12.02.2014
(73) Proprietor: Fives Landis Limited, Keighley BD20 7SD (GB)
(72) Inventor: FALKNER, Dermot Robert, Keighley Yorkshire BD20 7SD (GB)
(74) Representative: Sharrock, Daniel John
(86) International application number: PCT/GB2012/050749
(87) International publication number: WO 2012/136992

(56) References cited:
- EP-A2- 0 903 199
- GB-A- 2 161 101
- US-A- 5 150 545

## Description

### Field of the invention

The present invention relates to a support assembly for use with a machine tool. More particularly, it concerns a mechanism for carrying a measuring gauge to be maintained in contact with a workpiece mounted in a machine tool.

### Background to the invention

There are various known mechanisms for maintaining a measuring gauge in contact with a workpiece. More specifically, mechanisms have been developed to support a gauge which measures the diameter and roundness of a cylindrical workpiece rotating about a central reference axis, or a cylindrical portion orbiting around a central reference axis of a workpiece as the workpiece is rotated in a machine tool.

US-4,637,144 discloses an apparatus for monitoring the diameters of round objects rotating in a machine tool. The apparatus is supported by a holder which may be mounted on a carriage which reciprocates along ways provided in or on the table of the machine tool. Alternatively, the holder may be removably secured to the frame of the machine tool.

WO-97/12724 describes an apparatus for checking the diameter of crankpins of a crankshaft in the course of the machining of the crankshaft in a grinding machine. A first arm rotates with respect to a support arranged on the grinding wheel slide of the grinding machine. A second arm rotates with respect to the first and carries a measuring device.

EP-A-0903199 discloses a gauge for a grinding machine for in-process gauging of a cylindrical off-axis region of a workpiece, in particular a crankpin of a crankshaft. In one configuration, a triangular assembly is provided for mounting on a wheelhead and including a vertical slideway on which a linear motion drive is carried.

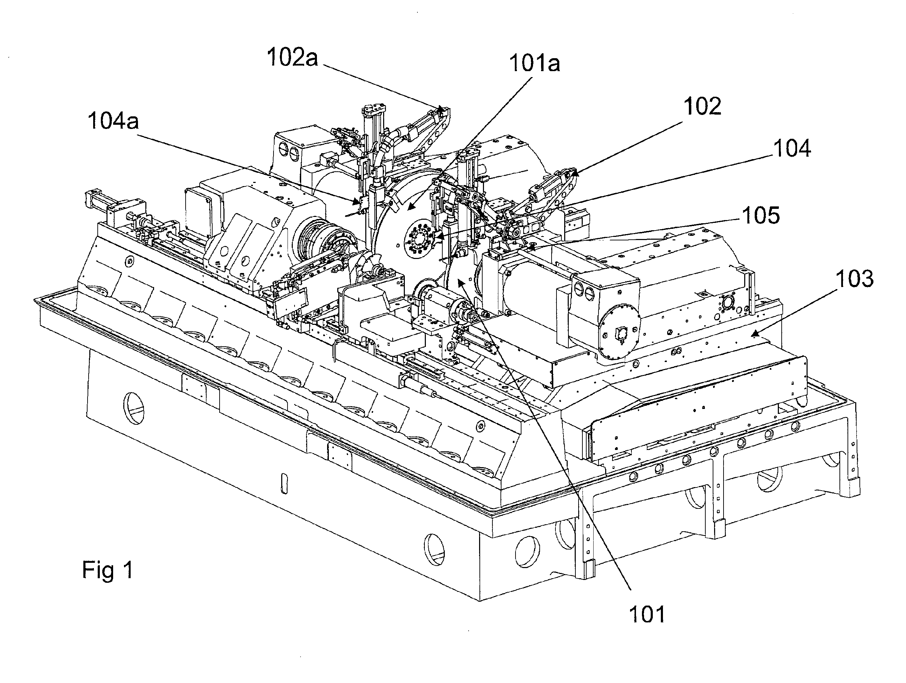

Figure 1 shows a machine tool including two known measuring gauge positioning arms 102, 102a. Two grinding wheels 101 and 101a are mounted on the machine for engagement with a workpiece. Grinding wheel 101 and positioning arm 102 are mounted on the same carriage assembly 103. Each positioning arm 102, 102a is in the form of a complex arrangement of hydraulically actuated linkages. It includes hydraulic actuation and a combination of springs and self-weight to ensure that respective measuring vees 104, 104a remain in intimate contact with the workpiece.

### Summary of the invention

The present invention is directed at an assembly for carrying a measuring gauge to be maintained in contact with a portion of a workpiece mounted in a machine tool arranged to rotate the workpiece about a machine reference axis, the workpiece portion following an orbital path around said machine reference axis as the workpiece rotates, wherein the assembly is configured to be mounted in use on a carriage shared with a material removing tool of said machine tool and comprises:
a slide support;
a slide which is slidably mounted on the slide support, and the slide is slidable along a linear axis with respect to the slide support;
a mount for connection to said measuring gauge;
a mount coupling which couples the mount to the slide, is pivotally mounted on the slide by a pivot and is arranged to allow variation of the spacing between the mount and the slide; and
a slide driver for reciprocating the slide relative to the slide support in synchronism with the orbital motion of said workpiece portion.

According to the invention, the linear axis along which the slide is slidable relative to the slide support is parallel in use to the direction of infeed of a material removing tool of said machine tool, and the mount coupling is arranged to accommodate variation of the spacing between the mount and the pivot due to the orbital motion of said workpiece portion about the machine reference axis.

The combination of features provided in accordance with the invention forms a mechanism able to maintain a measuring gauge in contact with a rotating workpiece portion with fewer degrees of freedom relative to known arrangements. Accordingly, the location of the measuring gauge can be more accurately monitored, and the mechanism is less complex to construct and install on a machine tool. In practice, only one adjustment may be required during installation of the assembly on a machine, namely the angle between the mount coupling and slide. This is in marked contrast to some known arrangements which require multiple adjustments in order to set up a positioning arm ready for use on a particular machine.

The assembly is particularly suitable for maintaining a gauge in contact with a workpiece portion which follows an orbital path around the machine reference axis as the workpiece rotates. The slide driver may be controlled to reciprocate the slide relative to the slide support in synchronism with the orbital motion of the workpiece portion.

The slide and slide driver of the present assembly enable adjustment of the mount coupling location relative to the slide support. When the assembly is mounted on a common carriage with a material removing tool of a machine tool, this slide arrangement facilitates control of the location of the mount coupling relative to the material removing tool. The inventor realised that this degree of freedom in combination with a pivotably mounted mount coupling facilitates maintenance of a measuring gauge in contact with a workpiece portion following an orbital path. This may be achieved without risk of the measuring gauge coming into contact with the material removing tool by angling the mount coupling back from the slide towards the workpiece and the material removing tool.

The slide driver may be controlled to reciprocate the slide relative to the slide support substantially in synchronism with the motion of a workpiece portion. In this way, the assembly is enabled to accommodate changes in the location of the portion of the workpiece relative to the slide support so as to maintain the measuring gauge in engagement with the workpiece portion. Preferably, the following error between the slide support and workpiece portion is sub-millimetre.

The trajectory of an orbiting part, relative to a reciprocating wheel-feed axis, can be resolved into a short horizontal motion and a longer vertical motion. The frequency of the horizontal motion is simple harmonic and twice the reciprocating frequency of the wheel-feed axis. The vertical motion is simple harmonic at the wheel-feed frequency. The distances from a nominal start position of both vertical and horizontal displacements are readily calculated by trigonometry.

The slide is slidable linearly with respect to the slide support, along a linear axis of motion. Where the assembly is mounted on a common carriage with a material removing tool, the axis of motion of the slide may be arranged parallel to the direction of infeed of the material removing tool. Thus, the assembly (and in particular, the slide) is able to move relative to the common carriage to adjust a small fraction of the wheel-feed distance (measured relative to the machine reference axis) to keep a measuring gauge in contact with an orbiting workpiece portion.

The mount coupling is coupled to the slide by a pivot so as to be rotatable relative to the slide about the pivot. The mount coupling is arranged to facilitate variation of the spacing between the mount and the slide and, more preferably, between the mount and the pivot. The spacing may be variable along a linear reference axis.

The mount coupling may accommodate motion of the mount which is in a lateral direction with respect to the direction of reciprocation of the slide (and preferably of the material removing tool).

In a preferred embodiment, the linear reference axis passes through the pivot and the mount coupling varies the spacing between the mount and the pivot along the linear reference axis. The mount coupling may be able to vary its length along the linear reference axis to accommodate changes in the spacing between the mount and the pivot due to the orbital motion of the workpiece portion. For example, the mount coupling may comprise a telescopic device.

Reciprocation of the slide and the change in length of the mount coupling may be the only degrees of freedom used by the assembly to follow a point exhibiting orbital motion.

In preferred embodiments, the assembly includes a retractor for retracting the mount away from the machine reference axis. The distal end of the assembly may thereby be drawn away from the working area of the machine when not in use. More particularly, the retractor may be arranged to pivot the mount coupling upwards. The retractor may comprise a piston, and a piston rod coupling the piston to the mount coupling such that actuation of the piston causes the linear reference axis of the mount coupling to pivot relative to the slide.

The assembly may be controlled by a dedicated controller. In embodiments, it may be arranged to be responsive to control signals originating from the controller of an associated machine tool. Those signals may be received directly from the machine tool controller or via the assembly's dedicated controller. This facilitates precise co-ordination of movement of the assembly with other movements controlled by the machine tool controller. A workpiece may be simultaneously measured using a measuring gauge mounted on the assembly whilst being machined by the machine tool.

The present invention is also directed at method for maintaining a measuring gauge in engagement with a portion of a workpiece rotating in a machine tool about a machine reference axis, with the workpiece portion following an orbital path around said machine reference axis as the workpiece rotates, the method comprising the steps of:
providing an assembly carrying the measuring gauge, the assembly including a slide which is slidably mounted on a slide support, wherein the slide is slidable along a linear axis with respect to the slide support, a mount connected to the measuring gauge, and a mount coupling which couples the mount to the slide, is pivotally mounted on the slide by a pivot and is arranged to facilitate variation of the spacing between the mount and the slide;
mounting the assembly on a carriage shared with a material removing tool of the machine tool;
arranging the assembly such that the measuring gauge is in engagement with the portion of the workpiece;
rotating the workpiece about the machine reference axis; and
reciprocating the slide relative to the slide support substantially in synchronism with the orbital motion of said workpiece portion about the machine reference axis, with the assembly accommodating changes in the location of the measuring gauge relative to the slide support so as to maintain the measuring gauge in engagement with the portion of the workpiece.

According to the invention, the linear axis along which the slide is slidable relative to the slide support is parallel to the direction of infeed of a material removing tool of said machine tool, and
the mount coupling is arranged to accommodate variation of the spacing between the mount and the pivot due to the orbital motion of said workpiece portion about the machine reference axis.

The measuring gauge may follow a surface centred on the machine reference axis. In a preferred method, the portion of the workpiece follows an orbital path around the machine reference axis as the workpiece rotates, and the method includes a step of reciprocating the slide relative to the slide support in synchronism with the orbital motion of said workpiece portion about the machine reference axis. For example, the workpiece may be a crankshaft and the workpiece portion in the form of a crank pin.

The measuring gauge may therefore be positioned in synchronism with the rotation of the workpiece about the machine reference axis such that the gauge remains in intimate contact with the surface of the rotating workpiece.

### Brief description of the drawings

Embodiments of the invention will now be described by way of example and with reference to the accompanying schematic drawings, wherein:
Figure 1 is a perspective view of a known machine tool including known gauge positioning arms;
Figure 2 is a side view of an assembly embodying the present invention together with a grinding wheel and workpiece;
Figures 3 and 4 show a retractor for inclusion in the assembly of Figure 2; and
Figures 5 to 11 show successive stages in the orbital motion of a workpiece whilst it is maintained in contact with a grinding wheel and a measuring gauge supported by an assembly embodying the present invention.

### Detailed description of the drawings

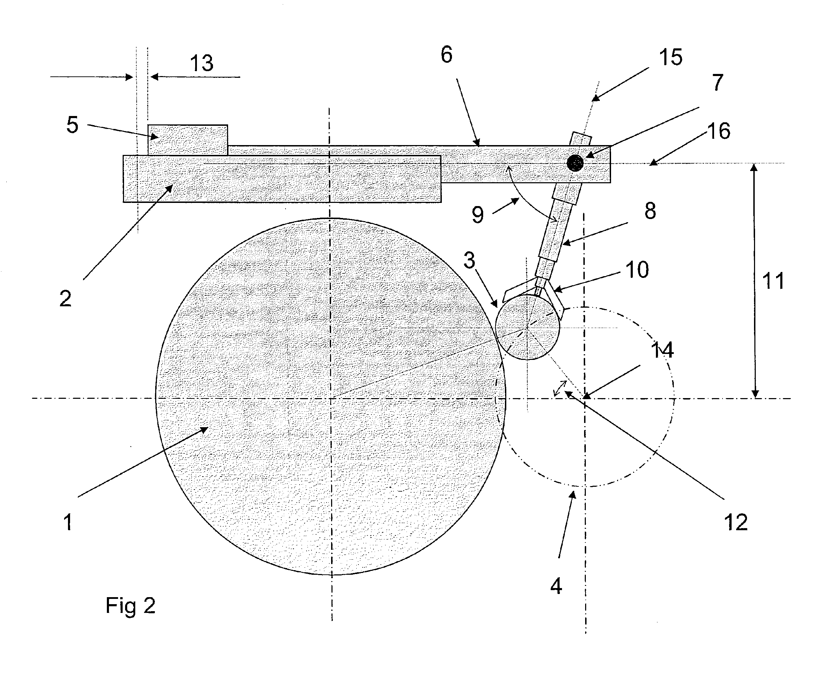

An assembly embodying the present invention is depicted schematically in Figure 2. A slide support 2 is provided for mounting onto a supporting structure. For example, this may be a wheel spindle's wheel side bearing block 105 as shown in Figure 1. A slide 6 is constrained to move linearly by bearing rails fixed to the slide support 2.

A mount coupling in the form of a telescoping rod 8 is attached to the slide at a pivot point 7.

A slide driver in the form of a drive motor 5 is provided to displace the slide 6 with respect to the slide support 2.

A gauge head 10 is mounted on the distal end of the rod 8. During a machining operation, grinding wheel 1 is maintained in contact with a workpiece portion 3 as it follows an orbital path 4 about a machine reference axis 14. The assembly maintains gauge head 10 in contact with the surface of the workpiece portion.

The reference axis 15 of the telescoping rod 8 and reference axis 16 of the slide intersect at the pivot 7. The angle 9 defined between the axes 15 and 16 at the pivot is selected to ensure that the gauge head 10 is not damaged in use by the grinding wheel 1 as it follows the normal excursions of its point of contact with the workpiece 3. The pivoting action of the coupling 8 about pivot 7 is constrained to a few degrees either side of its nominal selected angle. The constraint may be provided by a passive spring-actuated centralising mechanism for example (not shown). This constrained degree of rotation is provided to overcome any inaccuracies in the setup of the assembly and any deviations from a perfect workpiece following motion provided by the slider driver 5.

The length range of the telescoping rod 8 is determined by the height 11 of the pivot 7 above the machine reference axis 14, the radius of the workpiece portion 3, the nominal angle 9, and the throw of the orbit of a workpiece portion about reference axis 14, and varies in proportion to the arcsin of the angle 12 of the rotation of the workpiece.

Slide driver 5 may be implemented in the form of a linear motor and linear encoder. Alternatively, it may be formed by a rotary encoder and motor combination driving the slide via a lead-screw. The displacement 13 of the slide 6 relative to slide support 2 is proportional to the square of the arcsin of the angle 12 of the rotation of the workpiece.

The telescoping arm 8 may be provided with one or a combination of pre-load devices to ensure that the gauge vee runs in continuous intimate contact with the surface of the rotating workpiece. The pre-loaded device(s) may be selected from a resilient mechanical mechanism, a pneumatic mechanism, and a hydraulic mechanism.

Pivot point 7 is located above and ahead of the grinding wheel 1 at all times by movement of slide 6 such that angle 9 between the mount coupling and slide is always an acute angle. The gauge head thereby bears on the workpiece without coming into contact with the grinding wheel. Preferably, the acute angle is kept substantially the same throughout the motion of the workpiece. This angle may be about 73° as shown in the drawings, for example. However the most appropriate angle may vary depending on the particular support assembly and machine configuration concerned.

As shown, the assembly may be implemented with only a single pivotal coupling between the support of the assembly and the mount for the measuring gauge. The mount coupling is pivotable about an axis through point 7 which is parallel to the machine reference axis 14.

The slide driver is preferably controlled by the same control system as the machine tool, to facilitate co-ordination of its motion with that of the grinding wheel and the rotation of the workpiece.

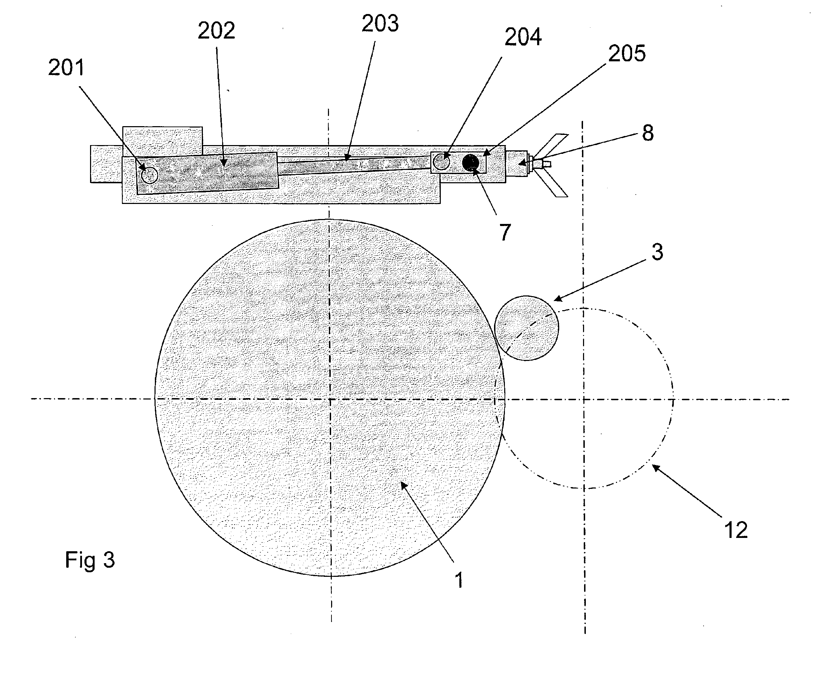

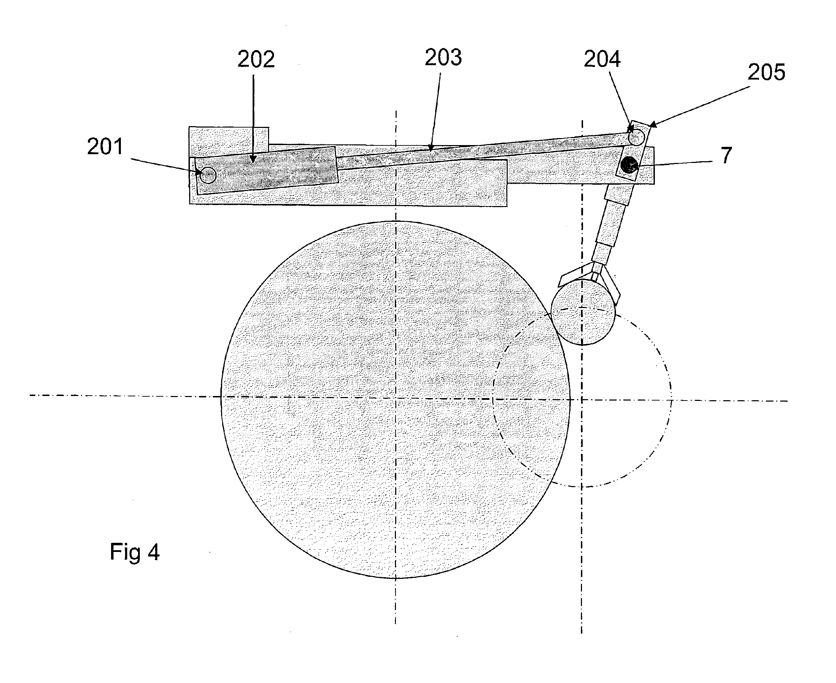

A retractor may be provided in the assembly of the present invention to move telescoping rod 8 and the gauge head 10 clear of the working region, for example to enable a workpiece to be loaded and/or other tooling to be set up on the machine. An implementation of such a retractor is depicted in Figures 3 and 4. The orientation of the retractor whilst the gauge head is in contact with the workpiece is shown in Figure 4, whilst the gauge head is shown in its retracted position in Figure 3.

A piston 202 is pivotally mounted on the slide support for rotation about pivot 201. The piston drives a piston arm 203, the distal end of which is pivotally coupled to a linkage 205 at pivot 204.

Actuation of the piston 202 to draw piston rod 203 towards it causes linkage 205 to rotate about pivot 7. This motion is transmitted to telescoping rod 8 via pivot 7 to cause telescoping rod 8 to rotate upwardly, anticlockwise in the view of Figures 3 and 4. The force exerted by the piston rod is sufficient to overcome the centralising mechanism provided to constrain rotation of the telescoping rod about pivot 7 whilst the gauge head is in contact with a workpiece.

A "park" or "clear" articulation point is reached when the telescoping rod 8 is parallel with the gauge slide 6.

Piston 202 may be in the form of a pneumatic or hydraulic cylinder. The cylinder may be selected according to the required speed of operation and the size of the assembly concerned.

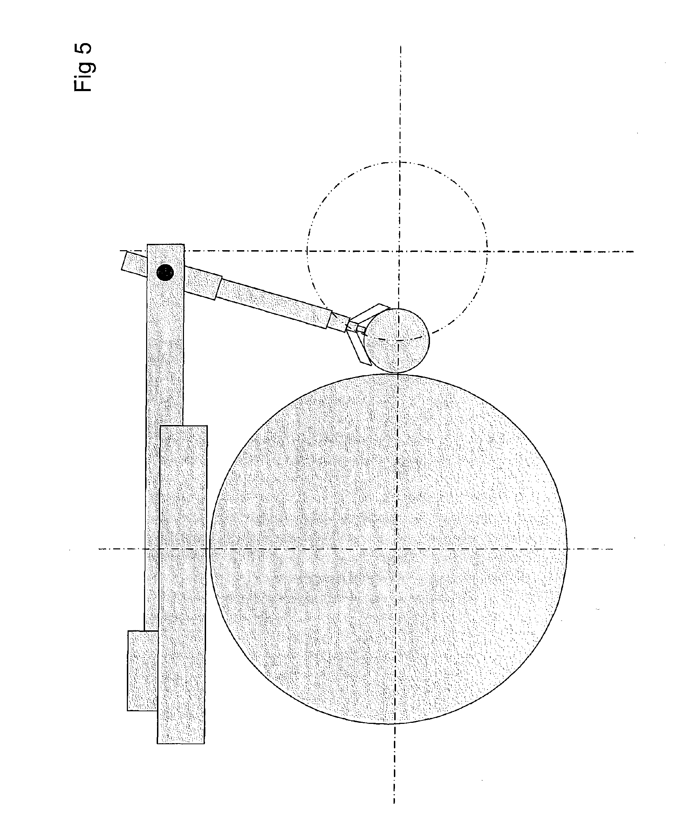

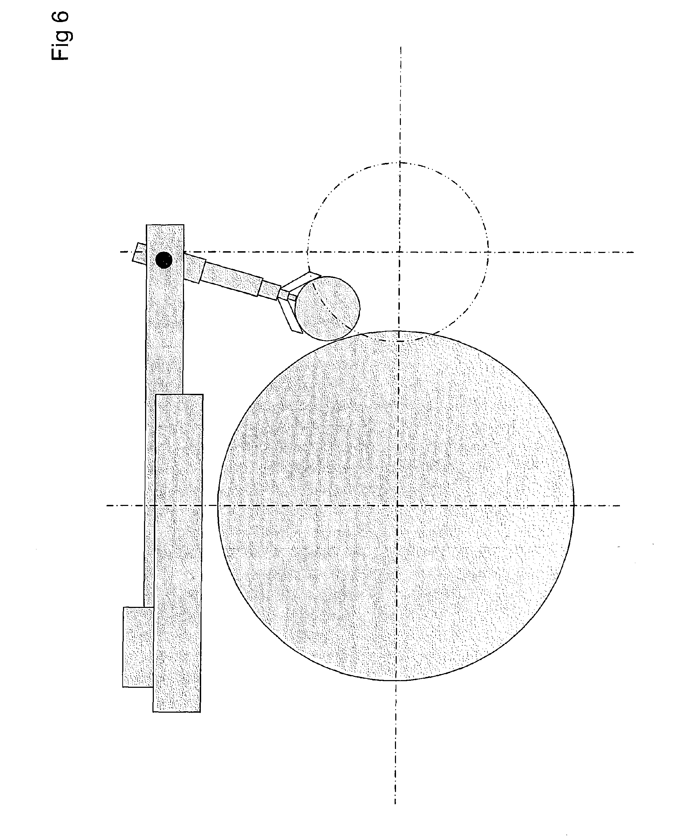

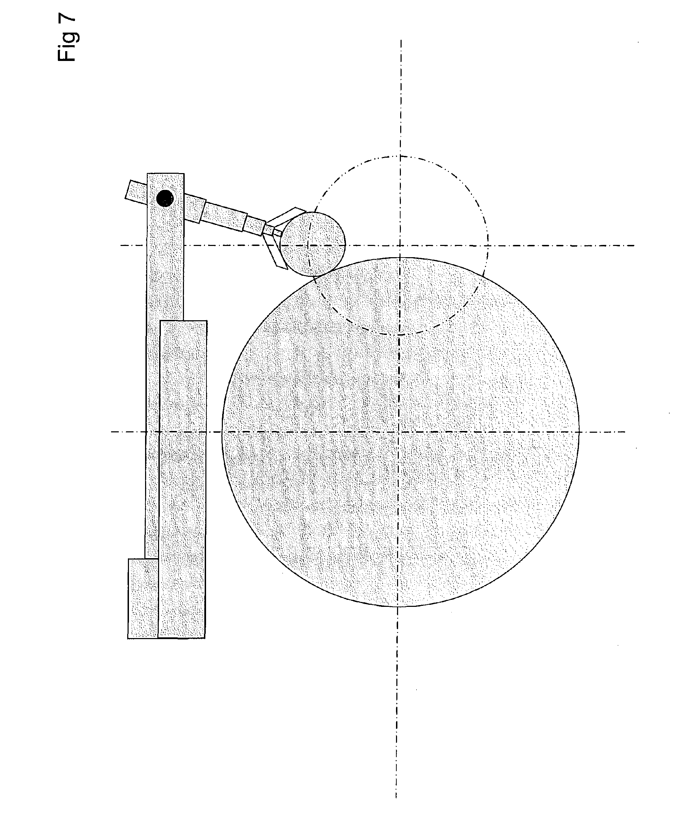

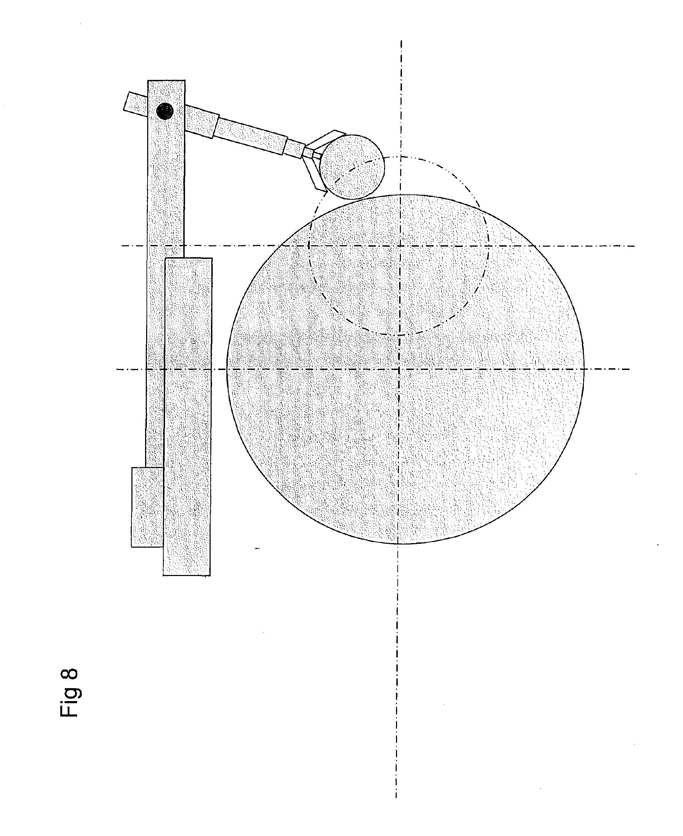

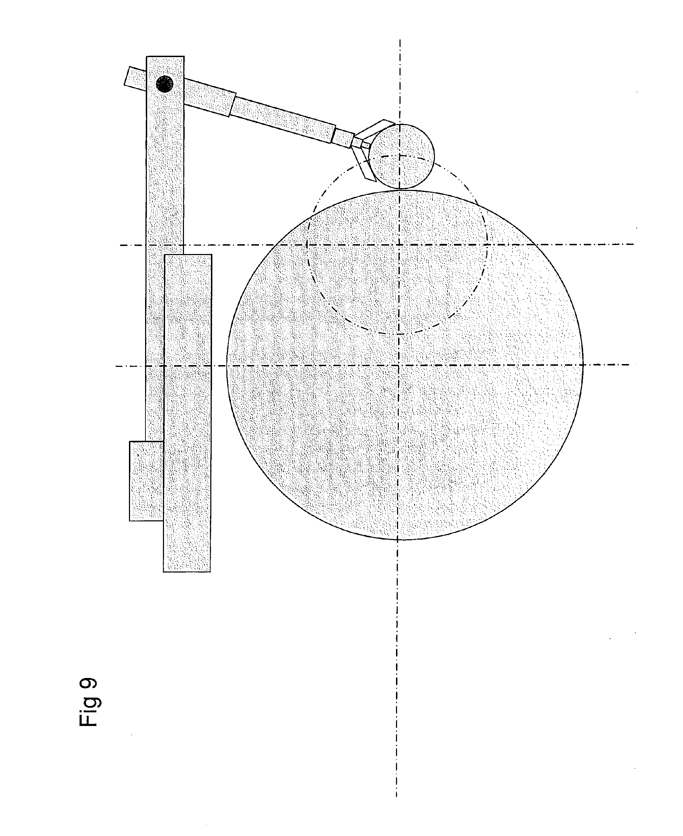

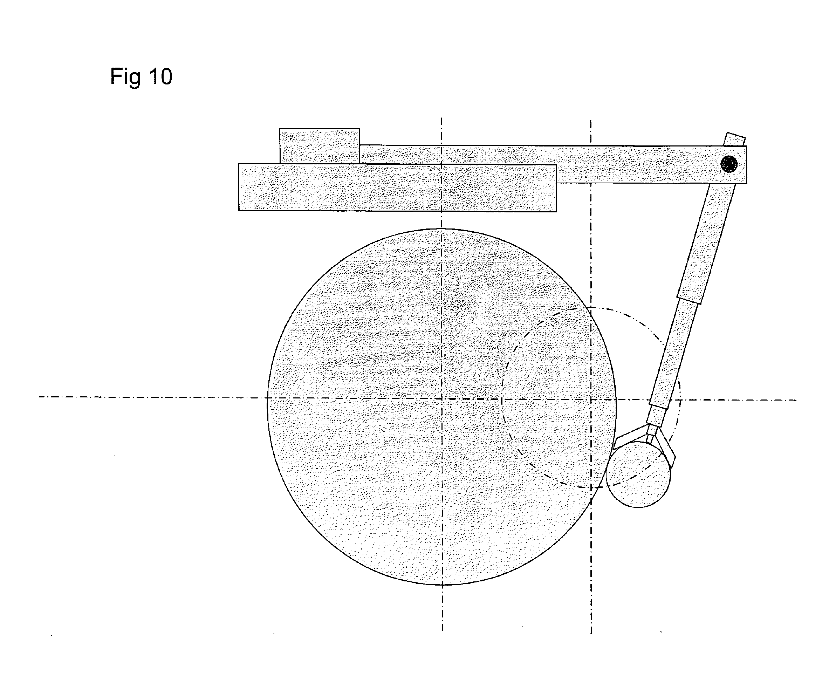

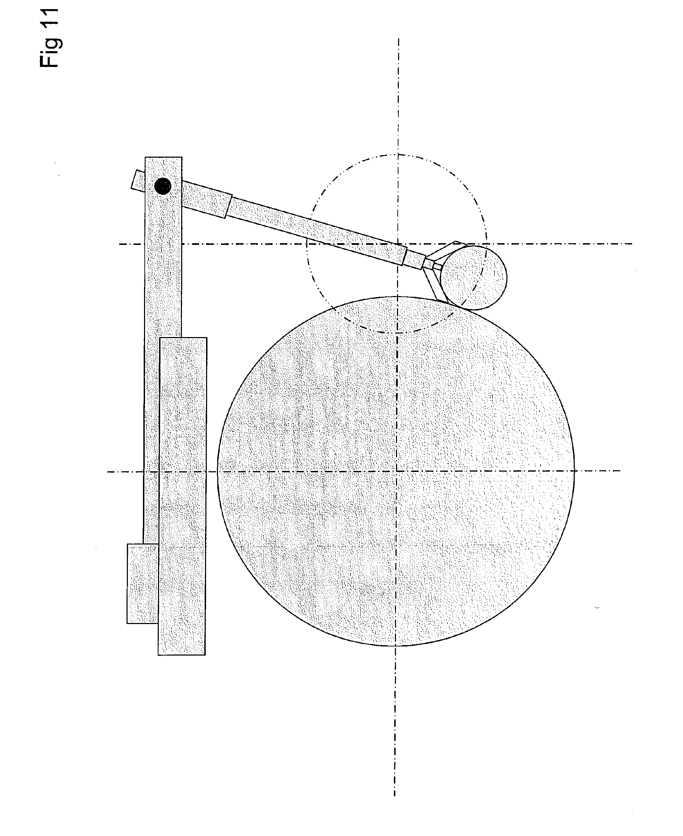

In order to illustrate operation of an assembly embodying the invention in practice to follow a workpiece along an orbital path, Figures 5 to 11 show a sequence of successive stages in the motion of the workpiece. It can be seen that the gauge head is maintained in intimate contact with the workpiece throughout its motion along the orbital path, without coming into contact with the grinding wheel.

Although a measuring gauge in the form of a vee or finger gauge is shown in the drawings, it will be appreciated that an assembly embodying the present invention may be used to support a range of measuring gauges such as an eddy current probe, a capacitance gauge, a Barkhausen noise detector, an ultrasound scanning head or indeed any transducer system that needs to follow the movement of the workpiece.

## Claims

1. An assembly for carrying a measuring gauge (10) to be maintained in contact with a portion of a workpiece (3) mounted in a machine tool arranged to rotate the workpiece about a machine reference axis (14), the workpiece portion following an orbital path around said machine reference axis as the workpiece rotates, wherein the assembly is configured to be mounted in use on a carriage shared with a material removing tool of said machine tool and comprises:
a slide support (2);
a slide (6) which is slidably mounted on the slide support, and the slide is slidable along a linear axis with respect to the slide support;
a mount for connection to said measuring gauge;
a mount coupling (8) which couples the mount to the slide, is pivotally mounted on the slide by a pivot (7) and is arranged to allow variation of the spacing between the mount and the slide; and
a slide driver (5) for reciprocating the slide relative to the slide support in synchronism with the orbital motion of said workpiece portion,
**characterised in that**
the linear axis along which the slide (6) is slidable relative to the slide support (2) is parallel in use to the direction of infeed of a material removing tool (1) of said machine tool, and
the mount coupling (8) is arranged to accommodate variation of the spacing between the mount and the pivot (7) due to the orbital motion of said workpiece portion (3) about the machine reference axis.

2. An assembly of claim 1, wherein the mount coupling (8) is arranged to accommodate variation of the spacing between the mount and the pivot (7) along a linear reference axis (15).

3. An assembly of claim 2, wherein the mount coupling (8) is telescopic.

4. An assembly of any preceding claim, wherein the mount coupling (8) includes a preload device for biasing a measuring gauge (10) mounted on the assembly in contact with a workpiece (3) towards the workpiece.

5. An assembly of claim 4, wherein the preload device comprises at least one of a resilient mechanical mechanism, a pneumatic mechanism, and a hydraulic mechanism.

6. An assembly of any preceding claim, wherein the slide driver (5) comprises a linear motor.

7. An assembly of any of claims 1 to 5, wherein the slide driver (5) comprises a rotary motor.

8. An assembly of any preceding claim, including a retractor for retracting the mount away from the machine reference axis (14).

9. An assembly of claim 8, wherein the retractor is arranged to pivot the mount coupling (8) upwards.

10. An assembly of claim 8 or claim 9, wherein the retractor comprises a piston (202), and a piston rod (203) coupling the piston to the mount coupling (8) such that actuation of the piston causes the linear reference axis (15) of the mount coupling to pivot relative to the slide (6).

11. An assembly of any preceding claim in combination with a controller for controlling the slide driver (5).

12. A machine tool including an assembly of any preceding claim.

13. A machine tool of claim 12, wherein the controller of the machine tool is arranged to control the slide driver (5).

14. A machine tool of claim 12 or claim 13, wherein the assembly is supported by a carriage which is also arranged to carry a material removing tool for engagement with a workpiece mounted on the machine tool.

15. A method for maintaining a measuring gauge (10) in engagement with a portion of a workpiece (3) rotating in a machine tool about a machine reference axis (14), with the workpiece portion following an orbital path around said machine reference axis as the workpiece rotates, the method comprising the steps of:
providing an assembly carrying the measuring gauge, the assembly including a slide (6) which is slidably mounted on a slide support (2), wherein the slide is slidable along a linear axis with respect to the slide support, a mount connected to the measuring gauge, and a mount coupling (8) which couples the mount to the slide, is pivotally mounted on the slide by a pivot (7) and is arranged to facilitate variation of the spacing between the mount and the slide;
mounting the assembly on a carriage shared with a material removing tool (1) of the machine tool;
arranging the assembly such that the measuring gauge (10) is in engagement with the portion of the workpiece (3);
rotating the workpiece about the machine reference axis (14); and
reciprocating the slide relative to the slide support substantially in synchronism with the orbital motion of said workpiece portion about the machine reference axis, with the assembly accommodating changes in the location of the measuring gauge relative to the slide support (2) so as to maintain the measuring gauge in engagement with the portion of the workpiece,
**characterised in that**
the linear axis along which the slide (6) is slidable relative to the slide support (2) is parallel to the direction of infeed of a material removing tool of said machine tool, and
the mount coupling (8) is arranged to accommodate variation of the spacing between the mount and the pivot (7) due to the orbital motion of said workpiece portion (3) about the machine reference axis.

## Patentansprüche

1. Anordnung zum Tragen eines Messgeräts (10), das in Kontakt mit einem Abschnitt eines Werkstücks (3) gehalten werden soll, das in einer Werkzeugmaschine befestigt ist, die dazu angeordnet ist, das Werkstück um eine Maschinenbezugsachse (14) zu drehen, wobei der Werkstückabschnitt bei Drehung des Werkstücks einer Kreisbahn um die Maschinenbezugsachse folgt, wobei die Anordnung dazu konfiguriert ist, bei Verwendung auf einem Schlitten, der mit einem Materialentfernungswerkzeug der Werkzeugmaschine geteilt wird, befestigt zu sein, und Folgendes umfasst:
eine Gleitstückstütze (2);
ein Gleitstück (6), das an der Gleitstückstütze verschiebbar befestigt ist, wobei das Gleitstück entlang einer linearen Achse bezüglich der Gleitstückstütze gleitfähig ist;
eine Halterung zur Verbindung mit dem Messgerät;
eine Halterungskupplung (8), die die Halterung mit dem Gleitstück koppelt, durch einen Drehzapfen (7) schwenkbar am Gleitstück befestigt ist und dahingehend angeordnet ist, eine Variation des Abstands zwischen der Halterung und dem Gleitstück zu gestatten; und
eine Gleitstückantriebsvorrichtung (5) zum mit der Kreisbewegung des Werkstückabschnitts synchronisierten Hin- und Herbewegen des Gleitstücks bezüglich der Gleitstückstütze,
**dadurch gekennzeichnet, dass**
die lineare Achse, entlang derer das Gleitstück (6) bezüglich der Gleitstückstütze (2) gleitfähig ist, bei Verwendung parallel zur Einzugsrichtung eines Materialentfernungswerkzeugs (1) der Werkzeugmaschine ist, und
die Halterungskupplung (8) dahingehend angeordnet ist, eine Variation des Abstands zwischen der Halterung und dem Drehzapfen (7) aufgrund der Kreisbewegung des Werkstückabschnitts (3) um die Maschinenbezugsachse zu berücksichtigen.

2. Anordnung nach Anspruch 1, wobei die Halterungskupplung (8) dahingehend angeordnet ist, eine Variation des Abstands zwischen der Halterung und dem Drehzapfen (7) entlang einer linearen Bezugsachse (15) zu berücksichtigen.

3. Anordnung nach Anspruch 2, wobei die Halterungskupplung (8) teleskopisch ist.

4. Anordnung nach einem vorhergehenden Anspruch, wobei die Halterungskupplung (8) eine Vorspannvorrichtung zum Vorbelasten eines Messgeräts (10), das an der Anordnung befestigt ist und mit einem Werkstück (3) in Kontakt steht, zum Werkstück hin umfasst.

5. Anordnung nach Anspruch 4, wobei die Vorspannvorrichtung einen elastischen mechanischen Mechanismus und/oder einen pneumatischen Mechanismus und/oder einen hydraulischen Mechanismus umfasst.

6. Anordnung nach einem vorhergehenden Anspruch, wobei die Gleitstückantriebsvorrichtung (5) einen Linearmotor umfasst.

7. Anordnung nach einem der Ansprüche 1-5, wobei die Gleitstückantriebsvorrichtung (5) einen Drehmotor umfasst.

8. Anordnung nach einem vorhergehenden Anspruch, die eine Rückholvorrichtung zum Rückholen der Halterung von der Maschinenbezugsachse (14) weg umfasst.

9. Anordnung nach Anspruch 8, wobei die Rückholvorrichtung dahingehend angeordnet ist, die Halterungskopplung (8) nach oben zu schwenken.

10. Anordnung nach Anspruch 8 oder Anspruch 9, wobei die Rückholvorrichtung einen Kolben (202) und eine Kolbenstange (203), die den Kolben mit der Halterungskopplung (8) koppelt, so dass eine Betätigung des Kolbens bewirkt, dass die lineare Bezugsachse (15) der Halterungskopplung bezüglich des Gleitstücks (6) schwenkt, umfasst.

11. Anordnung nach einem vorhergehenden Anspruch in Kombination mit einer Steuerung zum Steuern der Gleitstückantriebsvorrichtung (5).

12. Werkzeugmaschine, die eine Anordnung nach einem vorhergehenden Anspruch umfasst.

13. Werkzeugmaschine nach Anspruch 12, wobei die Steuerung der Werkzeugmaschine dahingehend angeordnet ist, die Gleitstückantriebsvorrichtung (5) zu steuern.

14. Werkzeugmaschine nach Anspruch 12 oder Anspruch 13, wobei die Anordnung durch einen Schlitten gestützt wird, der auch dahingehend angeordnet ist, ein Materialentfernungswerkzeug zum Eingriff mit einem an der Werkzeugmaschine befestigten Werkstück zu tragen.

15. Verfahren zum Halten eines Messgeräts (10) im Eingriff mit einem Abschnitt eines Werkstücks (3), das sich in einer Werkzeugmaschine um eine Maschinenbezugsachse (14) dreht, wobei der Werkstückabschnitt bei Drehung des Werkstücks einer Kreisbahn um die Maschinenbezugsachse folgt, wobei das Verfahren die folgenden Schritte umfasst:
Bereitstellen einer Anordnung, die das Messgerät trägt, wobei die Anordnung ein Gleitstück (6), das auf einer Gleitstückstütze (2) gleitfähig befestigt ist, wobei das Gleitstück entlang einer linearen Achse bezüglich der Gleitstückstütze gleitfähig ist, eine mit dem Messgerät verbundene Halterung und eine Halterungskopplung (8), die die Halterung mit dem Gleitstück koppelt, durch einen Drehzapfen (7) schwenkbar am Gleitstück befestigt ist und dahingehend angeordnet ist, eine Variation des Abstands zwischen der Halterung und dem Gleitstück zu gestatten, umfasst;
Befestigen der Anordnung an einem Schlitten, der mit einem Materialentfernungswerkzeug (1) der Werkzeugmaschine geteilt wird;
derartiges Anordnen der Anordnung, dass das Messgerät (10) mit dem Abschnitt des Werkstücks (3) in Eingriff steht;
Drehen des Werkstücks um die Maschinenbezugsachse (14); und
mit der Kreisbewegung des Werkstückabschnitts um die Maschinenbezugsachse im Wesentlichen synchronisiertes Hin- und Herbewegen des Gleitstücks bezüglich der Gleitstückstütze, wobei die Anordnung Änderungen der Position des Messgeräts bezüglich der Gleitstückstütze (2) berücksichtigt, um das Messgerät im Eingriff mit dem Abschnitt des Werkstücks zu halten,
**dadurch gekennzeichnet, dass**
die lineare Achse, entlang derer das Gleitstück (6) bezüglich der Gleitstückstütze (2) gleitfähig ist, parallel zur Einzugsrichtung eines Materialentfernungswerkzeugs der Werkzeugmaschine ist, und
die Halterungskupplung (8) dahingehend angeordnet ist, eine Variation des Abstands zwischen der Halterung und dem Drehzapfen (7) aufgrund der Kreisbewegung des Werkstückabschnitts (3) um die Maschinenbezugsachse zu berücksichtigen.

## Revendications

1. Ensemble destiné à porter une jauge de mesure (10) destinée à être maintenue en contact avec une partie d'une pièce (3) montée dans une machine-outil prévue pour faire tourner la pièce autour d'un axe de référence de machine (14), la partie de pièce suivant une trajectoire orbitale autour dudit axe de référence de machine à mesure que la pièce tourne, l'ensemble étant configuré pour être monté, pendant l'utilisation, sur un chariot partagé avec un outil d'enlèvement de matière de ladite machine-outil et comprenant :
un support de coulisseau (2) ;
un coulisseau (6) qui est monté de manière à pouvoir coulisser sur le support de coulisseau, le coulisseau pouvant coulisser le long d'un axe linéaire par rapport au support de coulisseau ;
une fixation destinée à la connexion à ladite jauge de mesure ;
un accouplement de fixation (8) qui accouple la fixation au coulisseau, qui est monté de manière à pouvoir pivoter sur le coulisseau au moyen d'un pivot (7) et qui est arrangé de manière à permettre une variation de l'espacement entre la fixation et le coulisseau ; et
un entraînement de coulisseau (5) destiné à faire aller et venir le coulisseau par rapport au support de coulisseau de manière synchronisée avec le mouvement orbital de ladite partie de pièce, **caractérisé en ce que**
l'axe linéaire le long duquel le coulisseau (6) peut coulisser par rapport au support de coulisseau (2) est parallèle, pendant l'utilisation, à la direction d'entrée d'un outil d'enlèvement de matière (1) de ladite machine-outil, et
l'accouplement de fixation (8) est arrangé de manière à permettre une variation de l'espacement entre la fixation et le pivot (7) du fait du mouvement orbital de ladite partie de pièce (3) autour de l'axe de référence de machine.

2. Ensemble selon la revendication 1, dans lequel l'accouplement de fixation (8) est arrangé de manière à permettre une variation de l'espacement entre la fixation et le pivot (7) le long d'un axe de référence linéaire (15).

3. Ensemble selon la revendication 2, dans lequel l'accouplement de fixation (8) est télescopique.

4. Ensemble selon l'une quelconque des revendications précédentes, dans lequel l'accouplement de fixation (8) comporte un dispositif de précontrainte destiné à solliciter vers la pièce une jauge de mesure (10) montée sur l'ensemble en contact avec une pièce (3).

5. Ensemble selon la revendication 4, dans lequel le dispositif de précontrainte comprend au moins l'un parmi un mécanisme mécanique élastique, un mécanisme pneumatique, et un mécanisme hydraulique.

6. Ensemble selon l'une quelconque des revendications précédentes, dans lequel l'entraînement de coulisseau (5) comprend un moteur linéaire.

7. Ensemble selon l'une quelconque des revendications 1 à 5, dans lequel l'entraînement de coulisseau (5) comprend un moteur rotatif.

8. Ensemble selon l'une quelconque des revendications précédentes, comportant un rétracteur pour rétracter la fixation à l'écart de l'axe de référence de machine (14).

9. Ensemble selon la revendication 8, dans lequel le rétracteur est arrangé de manière à faire pivoter l'accouplement de fixation (8) vers le haut.

10. Ensemble selon la revendication 8 ou la revendication 9, dans lequel le rétracteur comprend un piston (202) et une tige de piston (203) accouplant le piston à l'accouplement de fixation (8) de telle sorte que l'actionnement du piston provoque le pivotement de l'axe de référence linéaire (15) de l'accouplement de fixation par rapport au coulisseau (6).

11. Ensemble selon l'une quelconque des revendications précédentes en combinaison avec un dispositif de commande pour commander l'entraînement de coulisseau (5).

12. Machine-outil comportant un ensemble selon l'une quelconque des revendications précédentes.

13. Machine-outil selon la revendication 12, dans laquelle le dispositif de commande de la machine-outil est arrangé de manière à commander l'entraînement de coulisseau (5).

14. Machine-outil selon la revendication 12 ou la revendication 13, dans laquelle l'ensemble est supporté par un chariot qui est également arrangé de manière à porter un outil d'enlèvement de matière destiné à s'engager avec une pièce montée sur la machine-outil.

15. Procédé pour maintenir une jauge de mesure (10) en prise avec une partie d'une pièce (3) tournant dans une machine-outil autour d'un axe de référence de machine (14), la partie de pièce suivant une trajectoire orbitale autour dudit axe de référence de machine à mesure que la pièce tourne, le procédé comprenant les étapes suivantes
fourniture d'un ensemble portant la jauge de mesure, l'ensemble comportant un coulisseau (6) qui est monté de manière à pouvoir coulisser sur un support de coulisseau (2), le coulisseau pouvant coulisser le long d'un axe linéaire par rapport au support de coulisseau, une fixation connectée à la jauge de mesure, et un accouplement de fixation (8) qui accouple la fixation au coulisseau, qui est monté de manière à pouvoir pivoter sur le coulisseau au moyen d'un pivot (7) et qui est arrangé de manière à faciliter une variation de l'espacement entre la fixation et le coulisseau ;
montage de l'ensemble sur un chariot partagé avec un outil d'enlèvement de matière (1) de la machine-outil ;
arrangement de l'ensemble de telle sorte que la jauge de mesure (10) soit en prise avec la partie de la pièce (3) ;
rotation de la pièce autour de l'axe de référence de machine (14) ; et
entraînement du coulisseau suivant un mouvement alternatif par rapport au support de coulisseau substantiellement de manière synchronisée avec le mouvement orbital de ladite partie de pièce autour de l'axe de référence de machine, l'ensemble permettant des modifications de l'emplacement de la jauge de mesure par rapport au support de coulisseau (2) de manière à maintenir la jauge de mesure en prise avec la partie de la pièce, **caractérisé en ce que**
l'axe linéaire le long duquel le coulisseau (6) peut coulisser par rapport au support de coulisseau (2) est parallèle à la direction d'entrée d'un outil d'enlèvement de matière de ladite machine-outil, et
l'accouplement de fixation (8) est arrangé de manière à permettre une variation de l'espacement entre la fixation et le pivot (7) du fait du mouvement orbital de ladite partie de pièce (3) autour de l'axe de référence de machine.
